# EUROPEAN PATENT SPECIFICATION

(11) **EP 4 177 021 B1**
(45) Date of publication and mention of the grant of the patent: **22.05.2024**
(21) Application number: 21206680.7
(22) Date of filing: 05.11.2021
(51) Int. Cl.: B26B 29/02, A01B 1/02

(54) **BLADE COVER AND AXE ASSEMBLY**
KLINGENABDECKUNG UND AXTANORDNUNG
COUVERCLE DE LAME ET ENSEMBLE HACHE

(43) Date of publication of application: 10.05.2023
(73) Proprietor: Fiskars Finland Oy Ab, 02150 Espoo (FI)
(72) Inventor: Kemppi, Mikko, 02150 Espoo (FI)
(74) Representative: Kolster Oy Ab

(56) References cited:
- US-A- 1 633 319
- US-A- 3 854 639
- US-A- 5 820 001

## Description

### TECHNICAL FIELD

The present invention relates to a blade cover and an axe assembly, and more particularly to a blade cover with a locking mechanism.

### BACKGROUND

The axe has many forms and specialized uses. The axe can be for example a splitting axe or a hatchet, also known as a camping axe. The most common form of the axe typically has a long handle with a steel head. The steel head may have a sharp edge and a poll. The splitting axe can be used with two hands, whereas the hatchet is a one-handed striking tool with a sharp edge on one side used for cutting and splitting wood, and a hammer head on the other side for striking purposes. Hatchets are lighter and has smaller size compared to usual axes making them easy to storage and travel.

Conventional blade covers usually cover both the sharp edge and the hammer head. Therefore, when using the hammer head of the axe, the user needs to take off the blade cover. This exposes the sharp edge of the axe and causes a significant risk of cutting something unintentionally, or in a worst-case scenario, getting severely injured. An example of prior art is given by the patent documentation US 1633319A.

### BRIEF DESCRIPTION

An object of the present invention is to provide an arrangement to reduce the risk of unintentional use of the sharp edge while allowing the hammer head to be used.

The invention is based on the idea of providing a blade cover for the sharp edge with a locking mechanism and a hatchet assembly. The locking mechanism prevents the blade cover to fall off during the usage of the hammer head and simultaneously prevents the sharp edge to be utilized accidently.

### BRIEF DESCRIPTION OF THE DRAWINGS

In the following the invention will be described in greater detail by means of preferred embodiments with reference to the attached drawings, in which
Figure 1 shows an axe assembly according to an embodiment;
Figure 2 shows an example of an axe with a through hole;
Figure 3 shows a blade cover with a rotatable switch attached;
Figure 4 shows a back view of the blade cover;
Figure 5 shows a blade cover, where the rotatable switch is separated from a receiver.

### DETAILED DESCRIPTION

The present invention pertains to an axe assembly. The axe assembly comprises an axe 1 and a blade cover 2. The axe 1 may be any kind of axe with a handle 10 and a tool head 11 but in the present Figures, the axe 1 is illustrated as a hatchet.

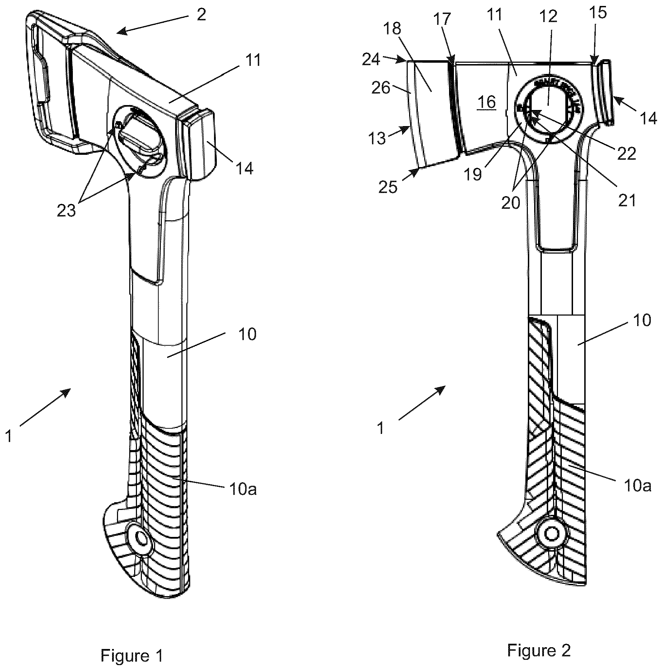

Figure 1 shows the axe assembly according to an embodiment and Figure 2 shows an example of the axe 1 with a through hole 12. The axe 1 comprises a handle 10 and a tool head 11. The tool head 11 comprises a sharp edge 13 on one side and a hammer head 14 on the other side. Between the sharp edge 13 and the hammer head 14 comprises a through hole 12, where an axis of the through hole 12 is preferably perpendicular to a longitudinal axis of the handle 10.

The tool head 11 is made of a first material, preferably steel, and at least part of the handle 10 is made of a second material, preferably polymer or composite material by injection molding, wherein the second material at least partially surrounds the tool head 11 and the through hole 12.

The tool head 11 is preferably made with forging but other manufacturing methods may be implemented, such as casting and hot rolling. An initial through hole may be circular or an open circle with a slot for facilitating the connection between the tool head 11 and the second material.

The handle 10 may be hollow, semi-hollow or solid. The whole handle 10 may be made of the second material, or a grip portion 10a of the handle 10 may be made of a third material while the second material connects the tool head 11 and the grip portion 10a together. The third material can be made of softer material such as thermoplastic elastomer or wood, for example.

The tool head 11 may comprise a first groove 15 around the tool head 11 separating the hammer head 14 portion from a cheek 16 of the tool head 11. The tool head 11 may comprise a second groove 17 around the tool head 11 separating a blade portion 18 from the cheek 16. Said grooves 15, 17 may facilitate injection molding of the second material and determine the final appearance. The area between said grooves 15, 17 may define the injection molding area and the areas outside the grooves 15, 17 remain exposed with the first material. The second material may form a bevel 19 around the through hole 12 for softening the edge of the through hole 12 and to facilitate attaching the blade cover 2.

The through hole 12 is preferably within the width of the handle 10 for a better ergonomic use. However, in some embodiments, the through hole 12 may locate partially or completely outside the width of the handle 10.

The through hole 12 may have different shapes. The initial through hole in the tool head 11 can be circular or the open circle and is preferably co-manufactured with the tool head 11 by forging. However, the initial hole may also be post-manufactured by drilling or machining. During the injection molding of the second material, the second material may form a minor segment inside the initial through hole altering the shape of the final through hole 12. As shown in Figure 2, the second material has formed two circular segments as rims 20 on each side of the through hole 12 so the final through hole 12 is oval shaped. In another embodiment, the final shape of the through hole 12 may be for example square, rectangle, triangle, circle, semicircle, pentagon, hexagon, etc.

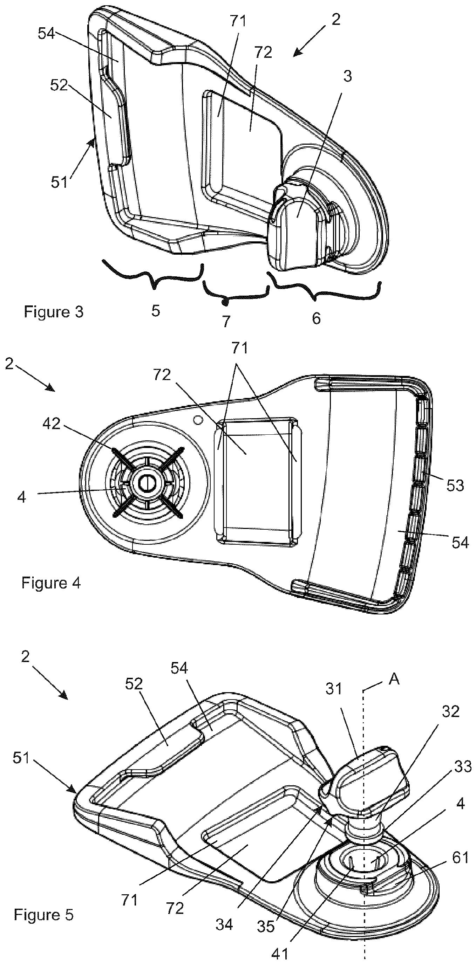

Figures 3-5 shows a blade cover 2 according to an embodiment. Figure 3 illustrates a blade cover 2 with a rotatable switch 3 attached, Figure 4 illustrates a back view of the blade cover 2, and Figure 5 illustrates a blade cover 2, where the rotatable switch 3 is separated from a receiver 4.

The blade cover 2 comprises a protective portion 5 arranged to cover the sharp edge 13 of the tool head 11 and a locking mechanism 6 releasably attachable to the tool head 11. The protective portion 5 is preferably on one end of the blade cover 2 and the locking mechanism 6 is on the other end of the blade cover 2, opposite the protective portion 5. In the accompanying Figures, the blade cover 2 is illustrated as paddle shaped with optimal rigidity and material application but it may have a different shape in other implementations.

The locking mechanism 6 may comprise a rotatable switch 3 and a receiver 4 fitted to receive the rotatable switch 3. The locking mechanism 6 is arranged to align with the through hole 12 so the through hole 12 and the rotatable swich 3 may have coinciding axis A when the blade cover 2 is attached to the tool head 11.

The rotatable swich 3 is arranged to be rotatable in relation to the receiver 4 when fastened to the receiver 4 and comprises a holder portion 31 to which the user can hold between fingers. The holder portion 31 can be a protrusion, or it can be flat or rounded knob. In the accompanying Figures, the holder portion 31 is illustrated as a flange extending outward from an exterior surface of the rotatable switch 3. The rotatable switch 3 may additionally comprise a shaft 32 with a snap lock pin 33.

The rotatable switch 3 is fastened to the receiver 4 preferably by snap fastening, but other mechanical fastening means may be implemented for allowing the rotatable switch 3 to rotate about the axis A, such as a threaded element. According to the embodiment illustrated in Figure 5, the receiver 4 comprises a frustum surface 41 made of at least two parts for tolerating elastic deformation and the rotatable switch 3 comprising the snap lock pin 33, wherein the rotatable switch 3 is snap fastened to the receiver 4 by guiding the snap lock pin 33 between said at least two parts of the frustum surface 41 and overcoming the elastic deformation threshold. The frustum surface 41 in this context refers to a truncated cone or pyramid shape having a discontinuous inner surface.

The snap lock pin 33 is illustrated as an elongated stem with an end having larger cross-section than the remaining stem preventing the snap lock pin 33 to disengage from the receiver 4 but allowing the rotatable switch 3 to rotate in relation to the receiver 4. The receiver 4 may alternatively comprise a tubular surface and the snap lock pin 33 may comprise at least one outward hook for engaging with an outer end of the tube.

In another embodiment features of the rotatable switch 3 and the receiver 4 may be reversed as the receiver 4 may comprise the snap lock pin 33 and the rotatable switch 3 may comprise the frustum or tubular surface.

The locking mechanism 6 may comprise a recess 61 fitted to accommodate the rim 20 of the through hole 12 when the blade cover 2 is attached to the tool head 11. This contact may facilitate positioning the locking mechanism 6 to the optimal spot in relation to the through hole 12.

The receiver 4 may comprise at least one additional support element 42 for supporting the receiver 4 to the locking mechanism 6. The additional support element 42 may be a plate connecting the outer surface of the receiver 4 to the back side of the locking mechanism 6. Figure 4 shows four additional support elements 42 evenly supporting the receiver 4 but other embodiments may comprise more or less additional support elements 42.

The rotatable switch 3 is rotatable between two positions, wherein in a first position the blade cover 2 is fixedly securable to the tool head 11, and in a second position the blade cover 2 is releasably attachable to the tool head 11. The first position is switched to the second position by rotating the rotatable switch 3 around the axis A. The rotatable switch 3 is arranged to pass through the through hole 12 in the second position.

In the accompanying Figures, the rotatable switch 3 is arranged to rotate approximately 90 degrees to change between the first position and the second position. However, depending on the shape of the through hole 12, the rotation rate may vary. For instance, it can be 45 degrees for a triangle shaped through hole, or 180 degrees for a semicircle shaped through hole.

The rotatable switch 3 comprises a first mating surface 34, and the tool head 11 comprises a second mating surface 21, where the second mating surface 21 may locate at an edge of the through hole 12. The first mating surface 34 is arranged to abut on the second mating surface 21 in the first position. The first mating surface 34 may be a surface of the outward section extending from the shaft 32 or a surface of the hook of the snap lock pin 33 of the rotatable switch 3 or threaded element formed on the surface of shaft 32 allowing the first mating surface 34 to contact the second mating surface 21 at the edge of the through hole 12. The second mating surface 21 may locate at the rim 20 inside the through hole 12. In another embodiment, the second mating surface 21 may locate at an outside rim of the through hole 12.

The first mating surface 34 may locate at a distance away from the holder portion 31 so the second mating surface 21 may fit between the holder portion 31 and the first mating surface 34. In the present Figures, the rim 20 of the through hole 12 is arranged to abut the rotatable switch 3 in the second position. The second mating surface 21 may respectively be flat or have a threaded formation.

In the embodiment illustrated in Figure 2, the second mating surface 21 may comprise a depression 22 allowing a matching projection 35 of the rotatable switch 3 to slide to the ideal first position.

When the first mating surface 34 and the second mating surface 21 are in contact with each other, the first mating surface 34 is abutting the second mating surface 21, the rotatable switch 3 is arranged to be securely fastened to the tool head 11 preventing the blade cover 2 to detach from the tool head 11. When the rotatable switch 3 is changed to the second position, and the first mating surface 34 and the second mating surface 21 are no longer in contact with each other, the blade cover 2 can be detached from the tool head 11 by passing the rotatable switch 3 through the through hole 12.

The second mating surface 21 may be formed of the second material arranged inside the initial through hole by injection molding. The second material is more moldable to the desired shape and design but is hard and tough enough to withstand impact and stress applied to the tool head 11. The second material is also lighter compared to steel making the final weight of the axe 1 lighter.

Lock and unlock signs 23 may be applied on the second material, for instance on the bevel 19, to indicate which one is the first position, and which one is the second position of the rotatable switch 3.

The blade cover 2 may be manufactured of same material as the second material, or it can be manufactured of different thermoplastic polymer such as polypropylene (PP) or polyethylene (PE). Both polymers have good chemical and mechanical properties.

The protective portion 5 may comprise an edge protecting strip 51 and at least one front sideward extension 52 and at least one back sideward extension 54 extending from respective front side and back side of the edge protecting strip 51. The protective portion 5 is arranged to receive the blade portion 18 and the edge protecting strip 51 may conform with the shape of the sharp edge 13 surrounding toe 24 and heel 25 portions of the tool head 11. At least one of the sideward extensions 52, 54 may conform with outer surface of a bevel face 26 of the tool head 11 for a snug fitting. However, in some embodiments the fitting may be slightly loose. The edge protecting strip 51 may be reinforced by additional thickness or reinforcement elements 53 to prevent the sharp edge 13 from cracking the blade cover 2. The additional reinforcement elements 53 may be partially hollow cavities along the edge protecting strip 51.

In the embodiment illustrated in the present Figures 3-5, the back sideward extension 54 may cover one side of the bevel face 26 completely and the protective portion 5 is designed as a half open case. However, in another embodiment, the back sideward extension 54 may cover the bevel face 26 only partially. The front sideward extension 52 may at least partially cover the other bevel face 26 for easier attaching and detaching of the tool head 11. The front side in this context refers to the same side as the rotatable switch 3, and the back side refers to the same side as the receiver 4.

A central vertical plane of the edge protecting strip 51 can be on a same vertical plane as one of the mating surfaces 34, 21, when the tool head 11 is in upward position and the handle 10 is in downward position.

The back sideward extension 54 may be connected to the locking mechanism 6 via a connecting portion 7. The connecting portion 7 may comprise a clip or at least two slits 71 for attaching the blade cover 2 to a belt or a strap allowing the axe assembly to be suspended by a strap from a backpack or a belt while trekking. The connecting portion 7 may comprise a protruded portion 72 between the two slits 71. The protruded portion 72 allows the strap or belt to be inserted and removed more easily through the slits 71 without bending the strap or belt.

The protecting portion 5, the connecting portion 7 and the locking mechanism 6 excluding the rotatable switch 3 may be integrally manufactured as one component, preferably by injection molding. The rotatable switch 3 may be manufactured as a second component to be attached to the receiver 4 afterwards.

The blade cover 2 can be attached to the axe 1 at the middle of the tool head 11 leaving the hammer head 14 of the axe 1 uncovered. With the blade cover of the present invention, the blade cover 2 is firmly attached to the axe 1 so that it would not disengage from the tool head 11 while using the hammer head 14.

## Claims

1. A blade cover (2) for an axe, comprising
a protective portion (5) arranged to cover a sharp edge of a tool head, **characterized in that** it further comprises
a locking mechanism (6) releasably attachable to the tool head, the locking mechanism (6) comprising a rotatable switch (3) and a receiver (4), the rotatable switch (3) is rotatable between two positions, wherein in a first position the blade cover (2) is fixedly securable to the tool head, and in a second position the blade cover (2) is releasably attachable to the tool head.

2. The blade cover as claimed in claim 1, wherein the protective portion (5) is on one end of the blade cover (2) and the locking mechanism (6) is on the other end of the blade cover (2), opposite the protective portion (5).

3. The blade cover as claimed in claim 1 or 2, wherein the protective portion (5) comprises an edge protecting strip (51) and at least one front sideward extension (52) and at least one back sideward extension (54) from respective front side and back side of the edge protecting strip (51).

4. The blade cover as claimed in claim 3, wherein the back sideward extension (54) is connected to the locking mechanism (6) via a connecting portion (7).

5. The blade cover as claimed in claim 4, wherein the connecting portion (7) comprises a clip or at least two slits (71) for attaching the blade cover (2) to a belt or a strap.

6. The blade cover as claimed in claim 5, wherein the connecting portion (7) comprises a protruded portion (72) between the two slits (71).

7. The blade cover as claimed in any one of the claims 1-6, wherein the protecting portion (5), the connecting portion (7) and the locking mechanism (6) excluding the rotatable switch (3) are integrally manufactured as one component.

8. The blade cover as claimed in any one of the claims 1-7, wherein the rotatable switch (3) is fastened to the receiver (4) by snap fastening.

9. The blade cover as claimed in claim 8, wherein the receiver (4) comprises a frustum surface (41) made of at least two parts and the rotatable switch (3) comprises a snap lock pin (33), wherein the rotatable switch (3) is snap fastened to the receiver (4) by guiding the snap lock pin (33) between said at least two parts of the frustum surface (41).

10. An axe assembly, comprising
an axe (1) having a tool head (11) and a handle (10), wherein the tool head (11) comprises a through hole (12), and
a blade cover (2) as claimed in any one of preceding claims.

11. The axe assembly as claimed in claim 10, wherein the through hole (12) and the rotatable switch (3) has a coinciding axis (A) when the blade cover (2) is attached to the tool head (11).

12. The axe assembly as claimed in claim 11, wherein the rotatable switch (3) comprises a first mating surface (34), and the tool head (11) comprises a second mating surface (21) at an edge of the through hole (12), wherein the first mating surface (34) is arranged to abut on the second mating surface (21) in the first position.

13. The axe assembly as claimed in claim 12, wherein the second mating surface (21) comprises a depression (22).

14. The axe assembly as claimed in any one of claims 10-13, wherein the tool head (11) is made of a first material and the handle (10) is made of a second material, wherein the second material at least partially surrounds the tool head (11) and the through hole (12).

15. The axe assembly as claimed in claim 14, wherein the second mating surface (21) is made of the second material.

## Patentansprüche

1. Klingenabdeckung (2) für eine Axt, umfassend:
einen Schutzabschnitt (5), der angeordnet ist, um eine scharfe Schneide eines Werkzeugkopfs zu bedecken, **dadurch gekennzeichnet, dass** sie ferner umfasst:
einen Verriegelungsmechanismus (6), der abnehmbar an dem Werkzeugkopf anbringbar ist, wobei der Verriegelungsmechanismus (6) einen drehbaren Schalter (3) und eine Aufnahme (4) umfasst, wobei der drehbare Schalter (3) zwischen zwei Positionen drehbar ist, wobei in einer ersten Position die Klingenabdeckung (2) fest an dem Werkzeugkopf sicherbar ist und in einer zweiten Position die Klingenabdeckung (2) abnehmbar an dem Werkzeugkopf anbringbar ist.

2. Klingenabdeckung nach Anspruch 1, wobei der Schutzabschnitt (5) sich an einem Ende der Klingenabdeckung (2) befindet und der Verriegelungsmechanismus (6) sich am anderen Ende der Klingenabdeckung (2) entgegengesetzt zum Schutzabschnitt (5) befindet.

3. Klingenabdeckung nach Anspruch 1 oder 2, wobei der Schutzabschnitt (5) einen Schneidenschutzstreifen (51) und mindestens eine vordere seitwärtige Erweiterung (52) und mindestens eine hintere seitwärtige Erweiterung (54) von der Vorderseite beziehungsweise der Hinterseite des Schneidenschutzstreifens (51) umfasst.

4. Klingenabdeckung nach Anspruch 3, wobei die hintere seitwärtige Erweiterung (54) über einen Verbindungsabschnitt (7) mit dem Verriegelungsmechanismus (6) verbunden ist.

5. Klingenabdeckung nach Anspruch 4, wobei der Verbindungsabschnitt (7) einen Clip oder mindestens zwei Schlitze (71) zum Anbringen der Klingenabdeckung (2) an einem Gurt oder Riemen umfasst.

6. Klingenabdeckung nach Anspruch 5, wobei der Verbindungsabschnitt (7) einen hervorstehenden Abschnitt (72) zwischen den zwei Schlitzen (71) umfasst.

7. Klingenabdeckung nach einem der Ansprüche 1 bis 6, wobei der Schutzabschnitt (5), der Verbindungsabschnitt (7) und der Verriegelungsmechanismus (6) mit Ausnahme des drehbaren Schalters (3) einteilig als ein Bauteil hergestellt sind.

8. Klingenabdeckung nach einem der Ansprüche 1 bis 7, wobei der drehbare Schalter (3) durch Druckknopfbefestigen an der Aufnahme (4) befestigt ist.

9. Klingenabdeckung nach Anspruch 8, wobei die Aufnahme (4) eine Kegelstumpfoberfläche (41) umfasst, die aus mindestens zwei Teilen besteht, und der drehbare Schalter (3) einen Druckverriegelungsstift (33) umfasst, wobei der drehbare Schalter (3) durch Führen des Druckverriegelungsstifts (33) zwischen den mindestens zwei Teilen der Kegelstumpfoberfläche (41) an der Aufnahme (4) druckknopfbefestigt ist.

10. Axtanordnung, umfassend:
eine Axt (1), die einen Werkzeugkopf (11) und einen Griff (10) aufweist, wobei der Werkzeugkopf (11) ein Durchgangsloch (12) umfasst, und
eine Klingenabdeckung (2) nach einem der vorhergehenden Ansprüche.

11. Axtanordnung nach Anspruch 10, wobei das Durchgangsloch (12) und der drehbare Schalter (3) eine zusammenfallende Achse (A) aufweisen, wenn die Klingenabdeckung (2) an dem Werkzeugkopf (11) angebracht ist.

12. Axtanordnung nach Anspruch 11, wobei der drehbare Schalter (3) eine erste Eingriffsoberfläche (34) umfasst und der Werkzeugkopf (11) eine zweite Eingriffsoberfläche (21) an einem Rand des Durchgangslochs (12) umfasst, wobei die erste Eingriffsoberfläche (34) angeordnet ist, um an die zweite Eingriffsoberfläche (21) in der ersten Position anzustoßen.

13. Axtanordnung nach Anspruch 12, wobei die zweite Eingriffsoberfläche (21) eine Vertiefung (22) umfasst.

14. Axtanordnung nach einem der Ansprüche 10 bis 13, wobei der Werkzeugkopf (11) aus einem ersten Material besteht und der Griff (10) aus einem zweiten Material besteht, wobei das zweite Material den Werkzeugkopf (11) und das Durchgangsloch (12) zumindest teilweise umgibt.

15. Axtanordnung nach Anspruch 14, wobei die zweite Eingriffsoberfläche (21) aus dem zweiten Material besteht.

## Revendications

1. Couvercle de lame (2) pour une hache comprenant :
une partie de protection (5) agencée pour couvrir un bord tranchant d'une tête d'outil, **caractérisé en ce qu'**il comprend en outre :
un mécanisme de verrouillage (6) pouvant être fixé, de manière amovible, à la tête d'outil, le mécanisme de verrouillage (6) comprenant un commutateur rotatif (3) et un dispositif de réception (4), le commutateur rotatif (3) peut tourner entre deux positions, dans lequel, dans une première position, le couvercle de lame (2) peut être fixé, de manière fixe, sur la tête d'outil, et dans une seconde position, le couvercle de lame (2) peut être fixé, de manière amovible, sur la tête d'outil.

2. Couvercle de lame selon la revendication 1, dans lequel la partie de protection (5) est sur une extrémité du couvercle de lame (2) et le mécanisme de verrouillage (6) est sur l'autre extrémité du couvercle de lame (2), opposée à la partie de protection (5).

3. Couvercle de lame selon la revendication 1 ou 2, dans lequel la partie de protection (5) comprend une bande de protection de bord (51) et au moins une extension latérale avant (52) et au moins une extension latérale arrière (54) du côté avant et du côté arrière respectifs de la bande de protection de bord (51).

4. Couvercle de lame selon la revendication 3, dans lequel l'extension latérale arrière (54) est raccordée au mécanisme de verrouillage (6) via une partie de raccordement (7) .

5. Couvercle de lame selon la revendication 4, dans lequel la partie de raccordement (7) comprend une attache ou au moins deux fentes (71) pour fixer le couvercle de lame (2) sur une courroie ou une sangle.

6. Couvercle de lame selon la revendication 5, dans lequel la partie de raccordement (7) comprend une partie en saillie (72) entre les deux fentes (71).

7. Couvercle de lame selon l'une quelconque des revendications 1 à 6, dans lequel la partie de protection (5), la partie de raccordement (7) et le mécanisme de verrouillage (6) excluant le commutateur rotatif (3), sont fabriqués de manière solidaire d'un seul tenant.

8. Couvercle de lame selon l'une quelconque des revendications 1 à 7, dans lequel le commutateur rotatif (3) est fixé au dispositif de réception (4) par fixation par encliquetage.

9. Couvercle de lame selon la revendication 8, dans lequel le dispositif de réception (4) comprend une surface tronconique (41) réalisée avec au moins deux parties et le commutateur rotatif (3) comprend une broche de verrouillage par encliquetage (33), dans lequel le commutateur rotatif (3) est fixé par encliquetage au dispositif de réception (4) en guidant la broche de verrouillage par encliquetage (33) entre lesdites au moins deux parties de la surface tronconique (41).

10. Ensemble hache comprenant :
une hache (1) ayant une tête d'outil (11) et un manche (10), dans lequel la tête d'outil (11) comprend un trou débouchant (12), et
un couvercle de lame (2) selon l'une quelconque des revendications précédentes.

11. Ensemble hache selon la revendication 10, dans lequel le trou débouchant (12) et le commutateur rotatif (3) a un axe coïncidant (A) lorsque le couvercle de lame (2) est fixé à la tête d'outil (11).

12. Ensemble hache selon la revendication 11, dans lequel le commutateur rotatif (3) comprend une première surface de couplage (34) et la tête d'outil (11) comprend une seconde surface de couplage (21) au niveau d'un bord du trou débouchant (12), dans lequel la première surface de couplage (34) est agencée pour venir en butée sur la seconde surface de couplage (21) dans la première position.

13. Ensemble hache selon la revendication 12, dans lequel la seconde surface de couplage (21) comprend une dépression (22) .

14. Ensemble hache selon l'une quelconque des revendications 10 à 13, dans lequel la tête d'outil (11) est réalisée avec un premier matériau et le manche (10) est réalisé avec un second matériau, dans lequel le second matériau entoure au moins partiellement la tête d'outil (11) et le trou débouchant (12) .

15. Ensemble hache selon la revendication 14, dans lequel la seconde surface de couplage (21) est réalisée avec le second matériau.
